# FASCICULE DE BREVET EUROPEEN

(11) **EP 2 256 890 B1**
(45) Date de publication et mention de la délivrance du brevet: **07.12.2011**
(21) Numéro de dépôt: 10158776.4
(22) Date de dépôt: 31.03.2010
(51) Int. Cl.: H02G 15/18

(54) **Ensemble pour recouvrir à enserrement un élément allongé de dimensions prédéterminées avec un manchon élastique de protection**
Einheit zur engen Ummantelung eines länglichen Elements vorherbestimmter Größe mit einer elastischen Schutzhülle
Assembly for tightly covering an elongated element of a predetermined size with a protective elastic sleeve

(30) Priorité: 18.05.2009 FR 0902408
(43) Date de publication de la demande: 01.12.2010
(73) Titulaire: Societe Industrielle de Construction d'Appareils et de Materiel Electriques, 19230 Arnac Pompadour (FR)
(72) Inventeur: Francois, Pierre Henri Adrien, 33000 Bordeaux (FR); Gorecki, Piotr, 24120 Terrasson La Villedieu (FR); Areias, Stéphane, 19240 Varetz (FR)
(74) Mandataire: Lepelletier-Beaufond, François

(56) Documents cités:
- WO-A-94/23480

## Description

L'invention a trait à la pose d'un manchon élastique de protection sur un élément allongé tel qu'une extrémité de câble électrique.

On connaît déjà, notamment par la demande de brevet français 2 791 480, des ensembles pour effectuer une telle pose comportant, en outre du manchon élastique, un noyau tubulaire servant à maintenir en expansion le manchon, lequel manchon recouvre le noyau à enserrement, le noyau étant adapté à recevoir intérieurement l'élément allongé puis à coulisser à la fois par rapport à l'élément allongé et par rapport au manchon élastique pour que ce dernier vienne recouvrir à enserrement l'élément allongé.

Pour permettre au manchon élastique de coulisser par rapport au noyau tubulaire, il est interposé entre ces derniers un film à faible coefficient de frottement qui s'étend au-delà d'une extrémité du manchon jusqu'à une extrémité du noyau opposée à ladite extrémité du manchon, le film faisant demi-tour sur cette extrémité du noyau, à l'intérieur duquel il se raccorde à un lien élastique fixé à l'autre extrémité du noyau pour être mis en tension.

Ce lien élastique assiste le coulissement du film à faible coefficient de frottement par rapport au noyau.

On connaît également par la demande internationale WO 94/23480 un ensemble similaire mais où le film à faible coefficient de frottement est remplacé par un élément de glissement fait en mailles, tricoté ou tressé.

L'invention vise à fournir un ensemble du même genre qui soit particulièrement simple, commode et économique.

Elle propose à cet effet un ensemble pour recouvrir à enserrement un élément allongé de dimensions prédéterminées avec un manchon élastique de protection, lequel ensemble comporte :
- ledit manchon ;
- un noyau tubulaire de maintien en expansion dudit manchon, recouvert à enserrement par ledit manchon, adapté à recevoir intérieurement ledit élément allongé ; et
- un élément de glissement mince et flexible, interposé entre ledit manchon et ledit noyau pour permettre audit noyau de coulisser par rapport audit manchon, lequel élément de glissement fait demi-tour sur une première extrémité du noyau pour être ensuite disposé intérieurement au noyau afin de pouvoir être tiré du côté de la seconde extrémité du noyau, opposée à ladite première extrémité ;
caractérisé en ce que ledit élément de glissement comporte un filet formé de fils souples avec au moins une nappe de fils reliés les uns aux autres suivant un agencement prédéterminé, lesquels fils de ladite nappe sont adaptés à glisser sur la surface externe du noyau et à tourner autour de ladite première extrémité du noyau.

Pour mettre en place le manchon sur l'élément allongé, le filet est tiré du coté de la seconde extrémité du noyau. Du fait de cette traction, le noyau coulisse par rapport au manchon et à l'élément allongé dans le sens qui va de la première extrémité du noyau vers sa seconde extrémité.

Le filet, du fait qu'il est formé de fils souples, présente de façon intrinsèque une aptitude particulièrement élevée au retournement. Du fait que les fils sont reliés les uns aux autres suivant un agencement prédéterminé, les déplacements des différents fils par rapport au noyau restent homogènes. L'extraction du noyau s'effectue ainsi suivant un mouvement régulier favorable à l'efficacité de la manoeuvre de pose du manchon.

Le filet est ainsi capable de remplacer le film à faible coefficient de frottement classiquement utilisé jusqu'ici pour permettre le glissement entre le manchon et le noyau, voire capable de remplacer le lien ou élément élastique prévu dans certains cas pour mettre en mouvement le film à faible coefficient de frottement.

On notera que le filet est moins onéreux que le film utilisé classiquement. En outre, pourvu que la dureté ou élasticité du manchon élastique ne soit pas trop élevée, il est possible d'utiliser le filet tel quel, sans ajouter de lubrifiant.

De préférence, pour des questions de simplicité et d'économie en particulier à la fabrication, ledit élément de glissement est formé exclusivement par ledit filet.

Selon des caractéristiques préférées, en raison de la qualité des résultats obtenus :
- ledit filet est tubulaire ;
- ledit filet comporte, en outre de la nappe, dite première nappe, de fils adaptés à glisser sur la surface externe du noyau et à tourner autour de la première extrémité du noyau, une seconde nappe de fils superposée à ladite première nappe ;
- ledit filet présente, au repos, des mailles régulières chacune en forme de losange ;
- ledit filet est formé par des fils en matière plastique soudés les uns aux autres aux sommets desdites mailles ;
- ledit filet est tubulaire et présente des mailles régulièrement réparties, avec un nombre de mailles sur une circonférence compris entre 18 et 42 et, au repos, un nombre de mailles par unité de longueur axiale compris entre 0,69 et 1,57 par cm ;
- ledit filet est en polypropylène ;
- ledit filet s'étend intérieurement audit noyau sur toute sa longueur puis extérieurement au noyau au-delà de sa dite seconde extrémité ; et/ou
- ladite première extrémité du noyau est arrondie.

L'exposé de l'invention sera maintenant poursuivi par la description détaillée d'un exemple de réalisation, donnée ci-après à titre illustratif et non limitatif, en référence aux dessins annexés. Sur ces dessins :
- la figure 1 est une vue en coupe d'un ensemble selon l'invention ;
- la figure 2 est une vue en perspective de l'ensemble selon l'invention sans le manchon élastique ;
- la figure 3 est une vue en coupe prise comme indiquée en III-III sur la figure 1 ;
- la figure 4 est la vue partielle en plan repérée par IV-IV sur la figure 3 ;
- la figure 5 est un agrandissement du détail repéré par V sur la figure 3 ;
- la figure 6 est une vue schématique de l'ensemble selon l'invention dans lequel est reçu intérieurement un élément allongé devant être recouvert à enserrement par le manchon élastique que comporte l'ensemble, l'élément allongé étant ici l'extrémité d'un câble électrique munie d'une cosse de raccordement ; et
- la figure 7 est une vue montrant le manchon élastique en cours de pose sur l'élément allongé.

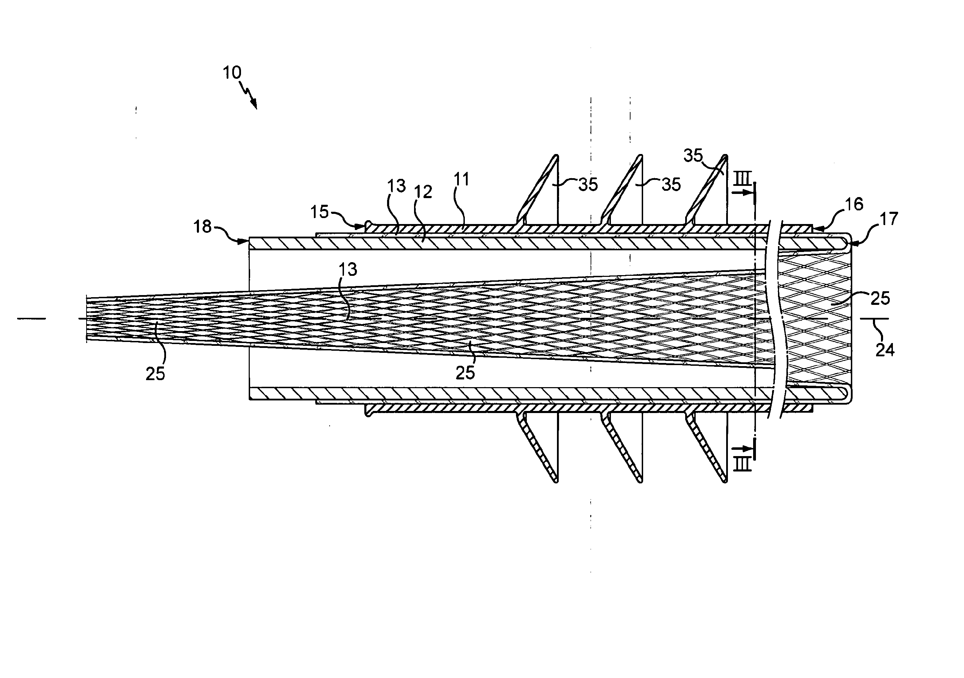

Comme on le voit notamment sur la figure 1, l'ensemble 10 illustré sur les dessins comporte un manchon élastique de protection 11, un noyau tubulaire 12 et un filet tubulaire 13.

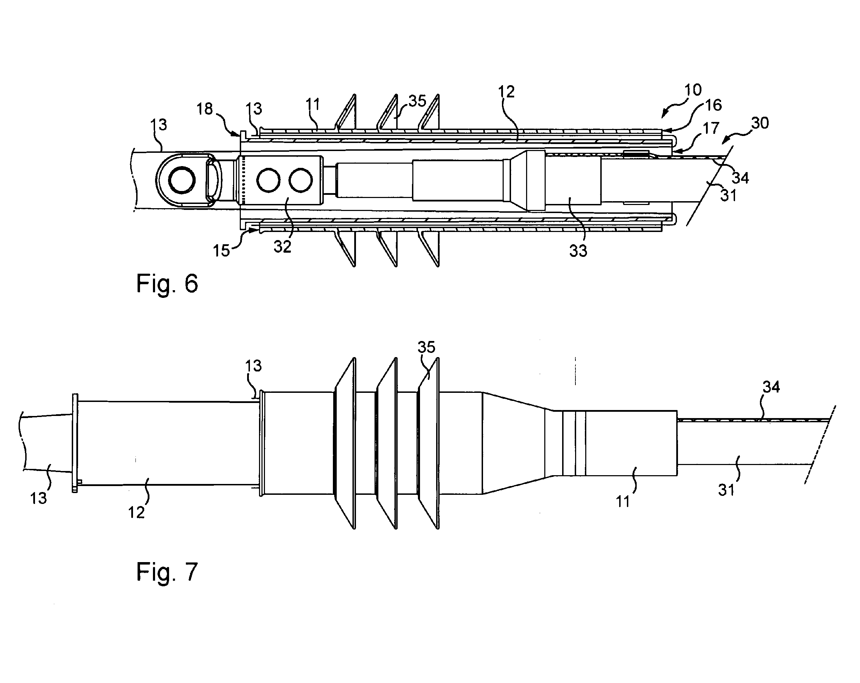

Le manchon 11 est prévu pour recouvrir à enserrement un élément allongé, tel qu'une extrémité 30 (figure 6) de câble électrique munie d'une -cosse-de-connexion, afin de procurer une isolation électrique et une étanchéité à l'air et à l'eau.

Le noyau tubulaire 12 sert à maintenir le manchon 11 en expansion, c'est-à-dire dans un état dilaté radialement par rapport à l'état qu'il adopte en l'absence de contrainte externe. Le noyau 12 est ainsi recouvert à enserrement par le manchon 11.

Comme montré sur la figure 6, l'espace interne au noyau 12 est adapté à recevoir intérieurement l'élément allongé qui doit être recouvert par le manchon de protection 11.

Le filet tubulaire 13 forme un élément de glissement mince et flexible, interposé entre le manchon 11 et le noyau 12 pour leur permettre de coulisser l'un par rapport à l'autre.

Le noyau 12 peut ainsi coulisser à la fois par rapport à l'élément allongé qui y est mis en place et par rapport au manchon 11 pour que celui-ci vienne recouvrir à enserrement l'élément allongé, ainsi qu'expliqué ultérieurement plus en détails.

Le noyau 12 s'étend au-delà de chacune des extrémités 15 et 16 du manchon 11.

L'extrémité 17 du noyau 12 est relativement proche de l'extrémité 16 du manchon 11 située du même côté tandis que l'autre extrémité 18 du noyau 12 est relativement éloignée de l'extrémité 15 du manchon 11 située du même côté.

La proximité des extrémités 16 et 17 est utile pour amorcer de façon simple et commode l'extraction du noyau 12, qui est prévue pour s'effectuer avec le noyau 12 qui est entraîné par rapport au manchon 11 dans le sens qui va de l'extrémité 17 vers l'extrémité 18, ainsi qu'expliqué ultérieurement.

Le filet 13 est interposé entre le manchon élastique 11 et le noyau 12 sur toute la longueur du manchon 11, c'est-à-dire entre ses extrémités 15 et 16.

Le filet 13 se prolonge légèrement au-delà de l'extrémité 15.

De l'autre côté du manchon 11, le filet 13 s'étend au-delà de l'extrémité 16 jusqu'à faire demi tour sur l'extrémité 17 du manchon 12 située du côté de l'extrémité 16 puis s'étend d'abord intérieurement au noyau 12 sur toute-sa longueur puis extérieurement au noyau 12 au-delà de son extrémité 18.

La portion du filet 13 qui s'étend au-delà de l'extrémité 18 sert à prendre en main le filet 13 afin de tirer sur celui-ci pour procéder à la pose du manchon 11, ainsi qu'expliqué ultérieurement.

On va maintenant décrire en détails le filet 13.

Il s'agit ici d'un filet tubulaire du type utilisé pour la protection et l'emballage d'objets tels que des bouteilles, des outils ou des pièces usinées. De tels filets sont disponibles par exemple auprès de la société Plastifrance à Gémenos (13881), France.

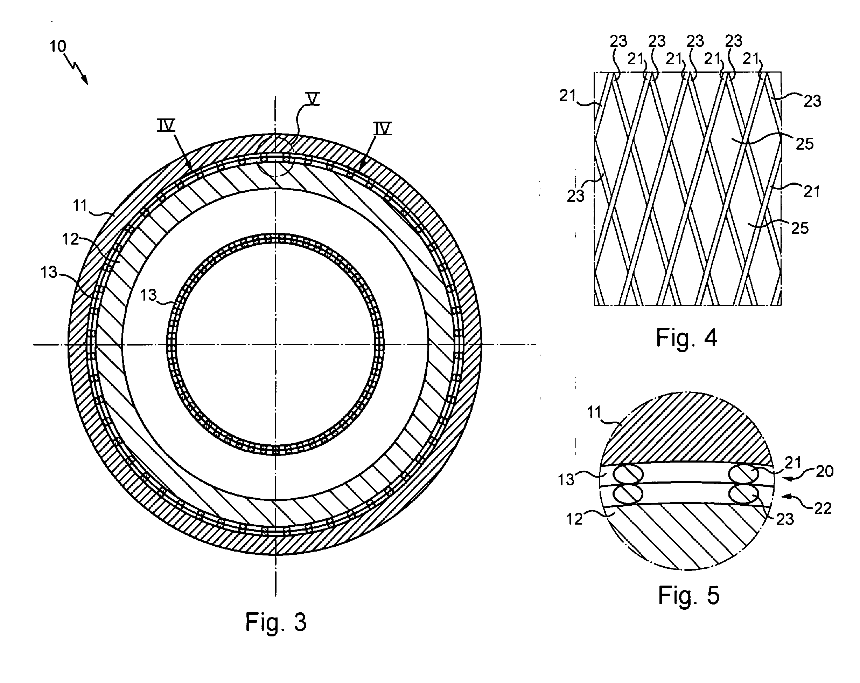

Comme on le voit plus particulièrement sur les figures 4 et 5, le filet 13 est formé par une première nappe 20 de fils 21 et par une deuxième nappe 22 de fils 23.

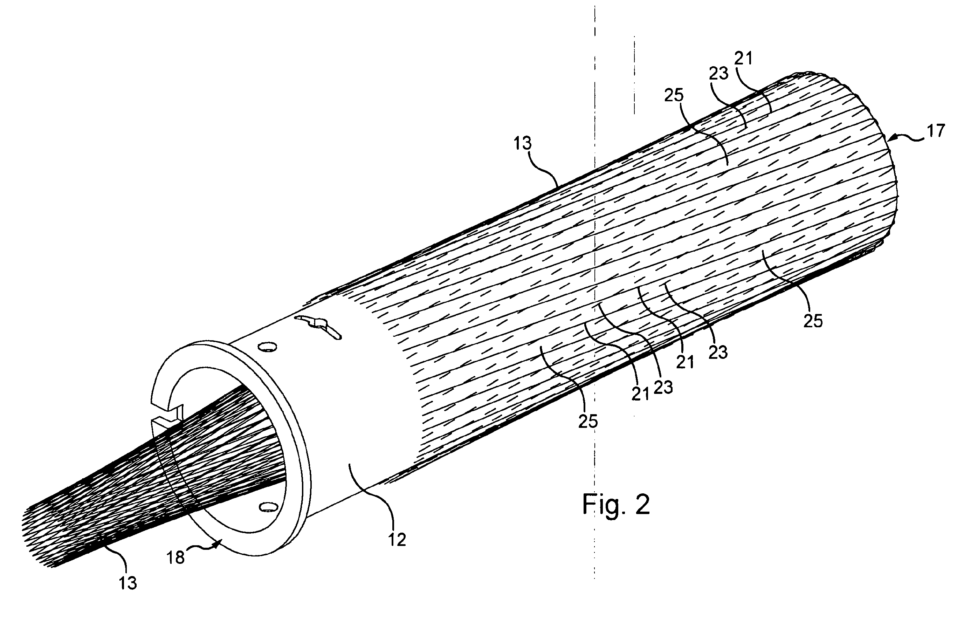

Sur la figure 2, à l'extérieur du noyau 12, les fils 21 sont représentés en trait plein et les fils 23 en trait interrompu.

Dans l'exemple illustré, le diamètre interne du filet 13 au repos (en l'absence de contrainte externe) correspond au diamètre externe du noyau 12, de sorte que le filet 13 est légèrement serré sur la surface externe du noyau 12.

La portion du filet 13 entourant extérieurement le noyau 12 a ainsi été illustré en position de repos (sans déformation).

Dans cette position de repos :
- les fils 21 de la nappe 20 sont parallèles les uns aux autres et espacés les uns les autres d'un pas régulier ;
- les fils 23 de la nappe 22 sont parallèles les uns aux autres et espacés les uns des autres du même pas régulier que les fils 21 de la nappe 20 ; et
- les fils 21 de la nappe 20 sont inclinés par rapport à la direction axiale (direction de l'axe 24 sur la figure 1 et direction verticale sur la figure 4) d'un angle prédéterminé dans un premier sens (vers le haut et vers la droite sur la figure 4) et les fils 23 sont inclinés du même angle mais en sens opposé (vers le haut et vers la gauche sur la figure 4).

Les fils 21 et 23 sont reliés les uns aux autres à leurs intersections, ici par soudure.

Le filet 13 présente ainsi des mailles régulières 25 chacune en forme de losange avec une soudure entre un fil 21 et un fil 23 à chaque sommet.

Dans l'exemple illustré, le filet 13 est en matière plastique extrudée, ici en polypropylène, les fils 21 et 23 étant appliqués les uns aux autres alors qu'ils sont encore chauds de sorte qu'ils se soudent les uns aux autres à leurs intersections.

Grâce à la souplesse des fils dont il est constitué, le filet 13 est capable d'adopter un diamètre plus important que son diamètre au repos, les côtés des mailles 25 s'arrondissant pour permettre l'augmentation de diamètre.

Celle-ci s'accompagne d'une diminution de la longueur du filet 13.

Il est également possible de déformer le filet 13 par rapport à sa position de repos en exerçant sur celui-ci une traction axiale. Les côtés des mailles 25 se rapprochent alors les uns des autres, le diamètre du filet 13 diminue tandis que sa longueur augmente.

Pour installer le filet 13 sur le noyau 12, le filet 13 est inséré à l'intérieur du noyau 12 puis il est retourné sur l'extrémité 17 afin qu'il vienne s'appliquer sur la surface externe du noyau 12, ainsi que montré sur la figure 2.

Le noyau ainsi équipé du filet 13 est mis en place dans le manchon 11 de façon classique, par exemple comme décrit dans la demande de brevet français 2 786 954.

Ainsi qu'on le voit plus particulièrement sur la figure 5, dans la portion du filet 13 interposée entre le noyau 12 et le manchon 11, la nappe 20 de fils 21 est du côté du manchon 11 et la nappe 22 de fils 23 est du côté du noyau 12.

Sur la figure 6, est représenté un élément allongé 30 inséré dans la portion du filet 13 se trouvant à l'intérieur du noyau 12. L'élément allongé 30 est ici une extrémité d'un câble électrique 31 munie d'une cosse de raccordement 32.

Ici, la cosse 32 est prévue pour être raccordée à une borne d'alimentation d'un transformateur de réseau de distribution d'électricité.

En outre-de la cosse 32, l'extrémité 30 du câble 31 comporte un raccord 33 pour connecter une enveloppe de blindage du câble 31 à une tresse conductrice 34 de mise à la terre.

L'extrémité 30 est positionnée à l'intérieur du dispositif 10 de sorte que la portion distale de la cosse 32 soit située au-delà de l'extrémité 18 du noyau 12. La longueur de l'ensemble 10 est telle que le raccord 33 est alors disposé à l'intérieur du noyau 12.

Pour que le manchon 11 vienne recouvrir l'extrémité de câble ou élément allongé 30, l'opérateur saisit d'une main le filet 13 dans sa portion située au-delà de l'extrémité distale de la cosse 32 (portion du filet 13 située le plus à gauche sur la figure 6) et exerce une traction sur le filet 13 tout en maintenant le manchon 11 avec l'autre main.

Du fait de cette traction, le noyau 12 coulisse par rapport au manchon 11 et à l'élément allongé 30 dans le sens qui va de son extrémité 17 vers son extrémité 18.

Cela permet au manchon 11 de se contracter sur l'élément allongé 30 au-delà de l'extrémité 17 du noyau 12. Cette contraction produit d'ailleurs une certaine poussée sur l'extrémité 17 qui facilite le coulissement du noyau 12.

La figure 7 montre le manchon 11 en cours de pose sur l'élément allongé 30, avec le manchon 11 en cours de contraction sur l'élément allongé 30 et le noyau 12 en cours d'expulsion.

Lorsque le noyau 12 est entièrement expulsé, le manchon 11 recouvre alors à enserrement l'élément allongé 30 auquel il procure une isolation électrique et une étanchéité à l'air et à l'eau.

On notera que sur les figures 1 et 2, la portion du filet 13 s'étendant intérieurement au noyau 12 puis au-delà de celui-ci a été représentée de façon tronconique pour montrer que cette portion du filet 13 se déforme lorsqu'est exercé sur le filet 13 l'effort de traction permettant la pose du manchon 11.

Cette forme tronconique a été choisie uniquement pour simplifier l'exécution des dessins. En pratique, cette portion du filet 13 a tendance à enserrer l'élément allongé 30 et à s'aplatir ensuite jusqu'à la main de l'opérateur avec laquelle celui-ci exerce une traction.

On notera encore que les mailles 25 ont été représentées sur les figures 1 et 2 pour montrer qu'elles ont une certaine forme dans la portion interposée entre le manchon 11 et le noyau 12 et qu'elles changent de forme dans la portion qui s'étend intérieurement au noyau 12 et au-delà de celui-ci lorsqu'une traction est exercée sur le filet 13.

Les formes illustrées sur les figures 1 et 2 pour les mailles 25 ont été choisies uniquement pour faciliter l'exécution des dessins. En particulier :
- sur la figure 2, dans la portion du filet 13 qui enserre la surface externe du manchon 12, la taille des mailles 25 est particulièrement exagérée (en pratique, les mailles ont une taille bien inférieure) ; et
- sur les figures 1 et 2, dans la portion du filet 13 représentée de façon tronconique, les mailles changent de forme avec leur périmètre qui diminue mais bien entendu les fils 21 et 23 ne sont pas élastiques et le périmètre des mailles est en réalité globalement constant.

On notera enfin que le manchon 12 est muni, comme montré sur les figures 2, 6 et 7, à son extrémité 18, d'une collerette (non représentée sur la figure 1) pouvant servir dans certains cas de moyen de prise sur le manchon 12 pour en faciliter l'extraction.

On observera que le filet 13, du fait qu'il est formé de fils souples, présente de façon intrinsèque une aptitude particulièrement élevée au retournement, y compris lorsque celui-ci s'effectue sous tension comme c'est le cas lorsqu'une traction relativement élevée est exercée sur le filet 13 pour provoquer l'extraction du noyau 12.

On observera encore, ainsi qu'on le voit plus particulièrement sur la figure 1, que l'extrémité 17 du noyau 12 est arrondie.

Cela facilite le glissement du filet 13 autour de l'extrémité 17 lors de la pose du manchon 11 sur un élément allongé.

La portion du filet 13 qui glisse sur la surface externe du noyau 12 et sur l'extrémité 17 est formée par les fils 23 de la nappe 22.

Du fait que les fils 23 sont reliés les uns aux autres par les fils 21 de la nappe 20 suivant un agencement prédéterminé, les déplacements des différents fils 23 par rapport au noyau 12 restent homogènes. L'extraction du noyau 12 s'effectue ainsi suivant un mouvement régulier favorable à l'efficacité de la manoeuvre de pose du manchon 11.

Le filet 13 est ainsi capable de remplacer le film à faible coefficient de frottement classiquement utilisé jusqu'ici pour permettre le glissement entre le manchon tel que 11 et le noyau tel que 12, voire capable, comme dans l'exemple illustré, de remplacer le lien ou élément élastique prévu dans certains cas pour mettre en mouvement le film à faible coefficient de frottement.

On notera que le filet 13 est moins onéreux que le film utilisé classiquement. En outre, pourvu que la dureté ou élasticité du manchon élastique 11 ne soit pas trop élevée, par exemple si elle est inférieure à 30 Shore A selon la norme ISO48 : 2007, il est possible d'utiliser le filet 13 tel quel, sans ajouter de lubrifiant.

Dans l'exemple illustré, le manchon 11 est agencé pour recouvrir l'extrémité de câble 30 montrée sur les figures 6 et 7.

Bien entendu, dans des variantes non illustrées, suivant l'élément allongé qui doit être recouvert à enserrement, lequel élément allongé peut bien entendu être différent d'une extrémité de câble munie d'une cosse de raccordement, par exemple une extrémité simple, le manchon 11 est remplacé par un manchon agencé différemment, par exemple plus long ou moins long et comportant ou non une ou plusieurs collerette(s) tronconique(s) telle(s) que les collerettes 35 que comporte le manchon 11.

Dans l'exemple illustré, le noyau 12 a une circonférence externe de l'ordre de 18,4 cm, les fils 21 et 23 du filet 13 ont une épaisseur de l'ordre de 1,4 mm, il y quarante-deux mailles sur une circonférence du filet 13 et, au repos, il y a 0,69 mailles par centimètre de longueur suivant la direction axiale (1,75 mailles par pouce).

En variante, le filet 13 est agencé différemment, avec par exemple les fils 21 et 23 qui ont épaisseur différente telle que 0,55, 0,9 ou 1,1 mm d'épaisseur ; le nombre de mailles par circonférence qui est par exemple de 18, 30 ou 36 ; ou encore le nombre de mailles qui est de 0,79 ou 1,57 par cm de longueur suivant la direction-axiale (respectivement 2 et 4 mailles par pouce).

Dans des variantes non illustrées, le filet 13 est remplacé par un filet agencé différemment, par exemple par un filet qui n'est pas tubulaire tel qu'un filet en forme de bande ; par un filet qui s'interrompt à l'intérieur du noyau 12 après avoir fait demi-tour sur l'extrémité 17, un tel filet étant raccordé à un lien élastique ou non élastique pour tirer sur le filet afin que le manchon puisse coulisser par rapport au noyau ; par un filet agencé différemment qu'en deux nappes de fils, par exemple en une seule nappe ou en davantage que deux nappes ; et/ou par un filet dont les mailles ont une forme différente de celle d'un losange au repos, par exemple un rectangle.

De nombreuses autres variantes sont possibles en fonction des circonstances, et l'on rappelle à cet égard que l'invention ne se limite pas aux exemples décrits et représentés.

## Revendications

1. Ensemble pour recouvrir à enserrement un élément allongé (30) de dimensions prédéterminées avec un manchon élastique de protection (11), lequel ensemble comporte :
- ledit manchon (11) ;
- un noyau tubulaire (12) de maintien en expansion dudit manchon (11), recouvert à enserrement par ledit manchon (11), adapté à recevoir intérieurement ledit élément allongé (30) ; et
- un élément de glissement mince et flexible, interposé entre ledit manchon (11) et ledit noyau (12) pour permettre audit noyau (12) de coulisser par rapport audit manchon (11), lequel élément de glissement fait demi-tour sur une première extrémité (17) du noyau (12) pour être ensuite disposé intérieurement au noyau (12) afin de pouvoir être tiré du côté de la seconde extrémité (18) du noyau (12), opposée à ladite première extrémité (17) ;
**caractérisé en ce que** ledit élément de glissement comporte un filet (13) formé de fils souples (21, 23) avec au moins une nappe (22) de fils (23) reliés les uns aux autres suivant un agencement prédéterminé, lesquels fils (23) de ladite nappe (22) sont adaptés à glisser sur la surface externe du noyau (12) et à tourner autour de ladite première extrémité (17) du noyau (12).

2. Ensemble selon la revendication 1, **caractérisé en ce que** ledit élément de glissement est formé exclusivement par ledit filet (13).

3. Ensemble selon l'une quelconque des revendications 1 ou 2 **caractérisé en ce que** ledit filet (13) est tubulaire.

4. Ensemble selon l'une quelconque des revendications 1 à 3, **caractérisé en ce que** ledit filet (13) comporte, en outre de la nappe (22), dite première nappe, de fils (23) adaptés à glisser sur la surface externe du noyau (12) et à tourner autour de la première extrémité (17) du noyau (12), une seconde nappe (20) de fils (21) superposée à ladite première nappe (22).

5. Ensemble selon l'une quelconque des revendications 1 à 4, **caractérisé en ce que** ledit filet (13) présente, au repos, des mailles régulières (25) chacune en forme de losange.

6. Ensemble selon la revendication 5, **caractérisé en ce que** ledit filet (13) est formé par des fils (21, 23) en matière plastique soudés les uns aux autres aux sommets desdites mailles (25).

7. Ensemble selon l'une quelconque des revendications 1 à 6, **caractérisé en ce que** ledit filet (13) est tubulaire et présente des mailles régulièrement réparties, avec un nombre de mailles sur une circonférence compris entre 18 et 42 et, au repos, un nombre de mailles par unité de longueur axiale compris entre 0,69 et 1,57 par cm.

8. Ensemble selon l'une quelconque des revendications 1 à 7, **caractérisé en ce que** ledit filet (13) est en polypropylène.

9. Ensemble selon l'une quelconque des revendications 1 à 8, **caractérisé en ce que** ledit filet (13) s'étend intérieurement audit noyau (12) sur toute sa longueur puis extérieurement au noyau (12) au-delà de sa dite seconde extrémité (18).

10. Ensemble selon l'une quelconque des revendications 1 à 9, **caractérisé en ce que** ladite première extrémité (17) du noyau (12) est arrondie.

## Claims

1. Kit for tightly covering an elongate member (30) with predetermined dimensions with a protective elastic sleeve (11), which kit includes:
- said sleeve (11);
- a tubular core (12) for stretching said sleeve (11), tightly covered by said sleeve (11) and adapted to receive internally said elongate member (30); and
- a thin and flexible sliding element disposed between said sleeve (11) and said core (12) to enable said core (12) to slide relative to said sleeve (11), which sliding element makes a half-turn over a first end (17) of the core (12) so as thereafter to be disposed inside the core (12) in order to be able to be pulled from the second end (18) of the core (12) opposite said first end (17);
**characterized in that** said sliding element includes a net (13) formed of flexible filaments (21, 23) with at least one layer (22) of filaments (23) connected to each other in a predetermined arrangement, which filaments (23) of said layer (22) are adapted to slide on the outside surface of the core (12) and to turn back on themselves around said first end (17) of the core (12).

2. Kit according to claim 1, **characterized in that** said sliding element is formed only by said net (13).

3. Kit according to either of claims 1 or 2 **characterized in that** said net (13) is tubular.

4. Kit according to any of claims 1 to 3, **characterized in that** said net (13) includes, further to the layer (22), called first layer, of filaments (23) adapted to slide on the outside surface of the core (12) and to turn back on themselves around the first end (17) of the core (12), a second layer (20) of filaments (21) superposed on said first layer (22).

5. Kit according to any of claims 1 to 4, **characterized in that**, at rest, said net (13) has regular meshes (25) each of lozenge shape.

6. Kit according to claim 5, **characterized in that** said net (13) is formed by plastic material filaments (21, 23) welded to each other at the corners of said meshes (25).

7. Kit according to any of claims 1 to 6, **characterized in that** said net (13) is tubular and has regularly distributed meshes, with a number of meshes around a circumference between 18 and 42 inclusive and, at rest, a number of meshes per axial length unit between 0.69 and 1.57 per cm inclusive.

8. Kit according to any of claims 1 to 7, **characterized in that** said net (13) is made of polypropylene.

9. Kit according to any of claims 1 to 8, **characterized in that** said net (13) extends inside said core (12) over the whole of its length and then outside the core (12) beyond said second end (18) thereof.

10. Kit according to any of claims 1 to 9, **characterized in that** said first end (17) of the core (12) is rounded.

## Patentansprüche

1. Anordnung zum umschließenden Überziehen eines langgestreckten Elements (30) mit vorbestimmten Abmessungen mit einer elastischen Schutzmuffe (11), wobei die Anordnung umfasst:
- die Muffe (11);
- einen röhrenförmigen Kern (12), um die Muffe (11) ausgedehnt zu halten, der mit der Muffe (11) umschließend überzogen wird und der dazu ausgelegt ist, das langgestreckte Element (30) innen aufzunehmen; und
- ein dünnes und flexibles Gleitelement, das zwischen die Muffe (11) und den Kern (12) eingefügt wird, um zu ermöglichen, dass der Kern (12) in Bezug auf die Muffe (11) gleitet, wobei das Gleitelement an einem ersten Ende (17) des Kerns (12) eine Kehrtwende durchführt, damit es anschließend innerhalb des Kerns (12) angeordnet wird, damit es auf der Seite des dem ersten Ende (17) gegenüberliegenden zweiten Endes (18) des Kerns (12) gezogen werden kann;
**dadurch gekennzeichnet, dass** das Gleitelement ein Netz (13), das aus nachgiebigen Fäden (21, 23) gebildet ist, mit mindestens einer Lage (22) von Fäden (23), die gemäß einer vorbestimmten Anordnung miteinander verbunden sind, umfasst, wobei die Fäden (23) der Lage (22) dazu ausgelegt sind, auf der äußeren Oberfläche des Kerns (12) zu gleiten und sich um das erste Ende (17) des Kerns (12) zu wenden.

2. Anordnung nach Anspruch 1, **dadurch gekennzeichnet, dass** das Gleitelement ausschließlich aus dem Netz (13) gebildet ist.

3. Anordnung nach einem der Ansprüche 1 oder 2, **dadurch gekennzeichnet, dass** das Netz (13) röhrenförmig ist.

4. Anordnung nach einem der Ansprüche 1 bis 3, **dadurch gekennzeichnet, dass** das Netz (13) zusätzlich zu der Lage (22), die erste Lage genannt wird, von Fäden (23), die dazu ausgelegt sind, auf der äußeren Oberfläche des Kerns (12) zu gleiten und sich um das erste Ende (17) des Kerns (12) zu wenden, eine zweite Lage (20) von Fäden (21), die über die erste Lage (22) gelegt ist, umfasst.

5. Anordnung nach einem der Ansprüche 1 bis 4, **dadurch gekennzeichnet, dass** das Netz (13) in der Ruhestellung regelmäßige Maschen (25) jeweils in Form einer Raute aufweist.

6. Anordnung nach Anspruch 5, **dadurch gekennzeichnet, dass** das Netz (13) aus Fäden (21, 23) aus Kunststoff gebildet ist, die an den Scheitelpunkten der Maschen (25) aneinander geschweißt sind.

7. Anordnung nach einem der Ansprüche 1 bis 6, **dadurch gekennzeichnet, dass** das Netz (13) röhrenförmig ist und regelmäßig verteilte Maschen mit einer Anzahl von Maschen auf einem Umfang zwischen 18 und 42 und in der Ruhestellung einer Anzahl von Maschen pro axialer Längenanordnung zwischen 0,69 und 1,57 pro cm aufweist.

8. Anordnung nach einem der Ansprüche 1 bis 7, **dadurch gekennzeichnet, dass** das Netz (13) aus Polypropylen besteht.

9. Anordnung nach einem der Ansprüche 1 bis 8, **dadurch gekennzeichnet, dass** sich das Netz (13) innerhalb des Kerns (12) auf seiner ganzen Länge, dann außerhalb des Kerns (12) über sein zweites Ende (18) hinaus erstreckt.

10. Anordnung nach einem der Ansprüche 1 bis 9, **dadurch gekennzeichnet, dass** das erste Ende (17) des Kerns (12) abgerundet ist.
